# EUROPÄISCHE PATENTSCHRIFT

(11) **EP 3 855 014 B1**
(45) Veröffentlichungstag und Bekanntmachung des Hinweises auf die Patenterteilung: **21.05.2025**
(21) Anmeldenummer: 20153162.1
(22) Anmeldetag: 22.01.2020
(51) Int. Cl.: F03D 1/06

(54) **GETEILTES ROTORBLATT EINER WINDENERGIEANLAGE SOWIE ROTORBLATTSEGMENT**
SPLIT ROTOR BLADE OF A WIND POWER PLANT AND ROTOR BLADE SEGMENT
PALE DE ROTOR DIVISÉE D'UNE ÉOLIENNE AINSI QUE SEGMENT DE PALE DE ROTOR

(43) Veröffentlichungstag der Anmeldung: 28.07.2021
(73) Patentinhaber: Nordex Energy SE & Co. KG, 22419 Hamburg (DE)
(72) Erfinder: Lipka, Thomas, 18055 Rostock (DE); Nickel, Andreas, 22769 Hamburg (DE); Block, Tim Berend, 24558 Henstedt-Ulzburg (DE)
(74) Vertreter: Epping - Hermann - Fischer

(56) Entgegenhaltungen:
- WO-A1-2013/075718
- FR-A- 1 187 166
- US-A1- 2015 292 477
- US-B2- 8 777 573
- US-B2- 9 284 948

## Beschreibung

Die vorliegende Erfindung betrifft ein geteiltes Rotorblatt einer Windenergieanlage. Darüber hinaus betrifft die Erfindung ein Rotorblattsegment.

Moderne Windenergieanlagen sind aus einer Mehrzahl von Rotorblättern, typischerweise drei Blättern, gebildet, die beispielsweise jeweils ein Gewicht von bis zu 35 Tonnen und eine Länge von bis zu 90 Metern aufweisen können.

Um den Transport solcher großen Rotorblätter zu erleichtern, ist vorgesehen, dass die Rotorblätter aus zwei oder mehr Rotorblattsegmenten bestehen, die am Aufstellungsort der Windturbine montiert werden. Solche Rotorblätter werden auch als segmentierte oder geteilte Rotorblätter bezeichnet. Die Rotorblattsegmente werden typischerweise bei der Montage des Rotorblatts an Teilungsstellen miteinander verbunden. Solche Verbindungen können jedoch dazu führen, dass das Rotorblatt in den Segmentierungsbereichen strukturell geschwächt wird, so dass eine strukturelle Verstärkung des Rotorblatts in diesen Bereichen erforderlich ist.

Im Betrieb werden die Verbindungen der Rotorblattsegmente durch die Rotation des Rotorblatts einer Biege- und Zentrifugalbelastung ausgesetzt. Dementsprechend müssen die Verbindungen so ausgelegt sein, dass sie den durch diese Art der Belastung verursachten Scher- und Normalspannungen standhalten. Beide Arten von Spannungen in den Verbindungen sind abhängig von einer Dicke des Rotorblattquerschnitts, so dass eine Erhöhung der Dicke die Spannung, die zum Beispiel aus einem Biegemoment entsteht, reduziert.

Aus aerodynamischer Sicht wird es jedoch gerade meist bevorzugt, die Dicke der Rotorblätter zu minimieren. Dementsprechend sieht sich der Fachmann mit zwei widersprüchlichen Problemstellungen konfrontiert: Die Erhöhung der Dicke verbessert die Festigkeit des Rotorblattes, ist aus aerodynamischer Sicht jedoch unerwünscht, und die Reduzierung der Dicke ist aus aerodynamischer Sicht wünschenswert, reduziert aber die Festigkeit der Verbindung.

Die WO 2013/075718 A1 bezieht sich auf ein Windturbinenblatt, insbesondere auf ein segmentiertes Windturbinenblatt.

Die US 9 284 948 B2 Windturbinenblatt mit teilweiser Blattverstellung, wobei das Blatt ein abgestumpftes aerodynamisches Profil aufweist, das an der Blattverstellgrenze des Blattes vorgesehen ist.

Die US 2015/292477 A1 bezieht sich auf ein Rotorblatt einer Windenergieanlage mit einem ersten Rotorblattsegment und einem zweiten Rotorblattsegment. Die beiden Rotorblattsegmente sind durch eine Schraubverbindung verbunden.

Die US 8 777 573 B2 betrifft ein Windturbinenblatt, das aus einem oder mehreren Blattabschnitten besteht, die durch ein Gelenk verbunden sind.

Eine Aufgabe, die der vorliegenden Erfindung zugrunde liegt, ist es, ein Konzept für ein geteiltes Rotorblatt bereitzustellen, welches einerseits eine besonders hohe Festigkeit und andererseits gute aerodynamische Eigenschaften in einem Segmentierungsbereich des geteilten Rotorblatts ermöglicht.

Gemäß einem ersten Aspekt wird ein geteiltes Rotorblatt für eine Windenergieanlage offenbart, welches bezogen auf eine Längsachse des Rotorblatts durch zumindest ein erstes Rotorblattsegment und ein zweites Rotorblattsegment gebildet ist. Das erste Rotorblattsegment weist an einem ersten Anschlussende einen ersten Verbindungsbereich, insbesondere entlang der Längsachse, auf und das zweite Rotorblattsegment weist an einem zweiten Anschlussende, welches dem ersten Anschlussende zugeordnet ist, einen zweiten Verbindungsbereich, insbesondere entlang der Längsachse, auf. Die beiden Verbindungsbereiche sind an einer Teilungsstelle des Rotorblatts verbunden und bilden einen gemeinsamen Segmentierungsbereich aus. In dem Segmentierungsbereich des Rotorblatts ist eine durch die Verbindung beider Rotorblattsegmente gebildete gemeinsame Außenkontur des Rotorblatts einfach gekrümmt. Ein Anstieg einer Vorbiegung des Rotorblatts ist im Segmentierungsbereich entlang der Längsachse konstant.

Das beschriebene Windenergieanlagenrotorblatt ist durch zwei an der Teilungsstelle verbundene Rotorblattsegmente gebildet. Erfindungsgemäß ist vorgesehen, dass im Bereich der Teilungsstelle, dem Segmentierungsbereich, die Außenkontur des Rotorblatts, die auch als aerodynamische Hülle bezeichnet und/oder von der äußeren Oberfläche der Rotorblattschale gebildet wird, eine einfache Krümmung aufweist. Dies bedeutet, dass nur eine Krümmung in einer Dimension vorliegt, insbesondere quer zur Längsachse des Rotorblatts. In einer weiteren Dimension, beispielsweise bezüglich der Längsachse, liegt im Wesentlichen (das heißt im Rahmen von Fertigungstoleranzen) keine Krümmung vor, das heißt ein Krümmungswert beträgt **0.** Die Erfindung sieht folglich eine besonders optimierte Hüllen- beziehungsweise Konturgestalt für segmentierte Rotorblätter vor, die im Segmentierungsbereich von einer doppelt gekrümmten Kontur in eine einfach gekrümmte Kontur übergeht.

Der Segmentierungsbereich erstreckt sich beispielsweise bei aerodynamischen Profilen mit einer dünnen Hinterkante, wie sie vorzugsweise in der äußeren Blatthälfte verwendet werden, in Blatttiefenrichtung gesehen von der Nasenkante in einem Bereich zwischen 10 und 70 Prozent der Blatttiefe. Bei Profilen mit einer dicken Hinterkante, insbesondere sogenannte Flatbackprofile, wie sie vorzugsweise in der inneren Blatthälfte verwendet werden, erstreckt sich der Segmentierungsbereich vorzugsweise über nahezu die gesamte Profiltiefe und insbesondere bis an direkt an die dicke Hinterkante heran, so dass hier zwischen 5 und bis zu 100% der Profiltiefe denkbar sind. Der Segmentierungsbereich umfasst beispielsweise den Bereich des Rotorblattes bzw. der Rotorblattsegmente in dem bzw. denen die Bauelemente zur Verbindung der Rotorblattsegmente untergebracht sind. Im Bereich der Nasenkante und der Endkante kann das Rotorblatt aufgrund einer beispielsweise aerodynamisch bedingten, besonderen Ausgestaltung eine doppelt gekrümmte Gestalt aufweisen. Der Segmentierungsbereich erstreckt sich bei zwischen 10 und 70 Prozent.

Die erfindungsgemäße Lösung ermöglicht, im Segmentierungsbereich ein besonderes hohes Maß an strukturmechanischer Festigkeit in Verbindung mit besonders günstigen aerodynamischen Eigenschaften zu erreichen. Dadurch können insbesondere bauraumoptimal besonders viele Verbindungselemente wie Lagerhülsen im Segmentierungsbereich eingebracht und für die Verbindung der Segmente verwendet werden. Ein wesentlicher Vorteil liegt darin, dass mit der vorgeschlagenen Änderung der aerodynamischen Hülle eine Einbettung dieser Verbindungselemente in die, die aerodynamische Hülle bildende, Rotorblattschale ohne eine große Gurtwelle, Bauraumverlust oder komplizierte Unterfütterung der Lager- beziehungsweise Gewindehülsen möglich ist. So werden die optimale Anzahl an Lagerhülsen, die optimale Position der Lagerhülsen und die optimale Anbindung des Hauptgurtes an diese Lagerhülsen ermöglicht.

Eine aerodynamische Hülle eines ungeteilten Rotorblattes ist typischerweise für den maximalen Ertrag aus Windenergie aerodynamisch und strukturmechanisch optimiert. Das bedeutet, dass sie bis auf den aus strukturmechanischen Überlegungen kreisrunden Blattanschluss doppelt gekrümmt ist, entlang ihrer Längsachse eine Vorbiegung hat und entlang der Längsachse aufgefädelte und zueinander verdrehte (Twist) aerodynamische Profile aufweist.

Die Erfinder haben erkannt, dass eine typischerweise doppelt gekrümmte, in den Profilquerschnitten verdrehte und frei geformte Außenkontur des Rotorblattes in Verbindung mit einer Vorbiegung besonders bei blattspitzennahen Teilungen des Rotorblattes problematisch für die Verbindung der Segmente ist. Insbesondere wäre ein Verbau oder eine Einmessung von geraden Verbindungsbaugruppen hochgradig erschwert und hätte einen Bauraumverlust zur Folge. Die typischerweise verwendeten geraden Längsbolzenverbindungen mittels Lagerhülsen müssten dabei im Inneren der in alle Raumrichtungen gekrümmten Hülle des Rotorblattes befestigt werden. Bei unveränderter aerodynamischer Hülle beziehungsweise Rotorblattschale würde das zu einem enormen Bauraumverlust für diese Verbindungselemente und somit zu einer konstruktiv und strukturmechanisch sehr ungünstigen Implementierung führen. Mittels der erfindungsmäßen Lösung wird ermöglicht, derartige Probleme zu vermeiden oder zumindest abzuschwächen.

Die beiden Segmente sind insbesondere bündig verbunden, so dass die an der Teilungsstelle vorliegenden Querschnittsprofile zumindest bezüglich der Außenkontur nahtlos ineinander übergehen. Durch das Verbinden der Segmente kann an der Teilungsstelle ein Spalt vorliegen. Mit anderen Worten wird durch die Teilung keine sprunghafte Änderung des aerodynamischen Profils, also der Außenkontur, beabsichtigt.

Es sei an dieser Stelle darauf hingewiesen, dass Rotorblätter typischerweise aus Halbschalen gefertigt werden, die miteinander an sich in Richtung der Längsachse erstreckenden Kanten verbunden werden. Für die Herstellung der Halbschalen werden Formen verwendet, in die ein Laminataufbau eingelegt wird, welcher mittels eines Vakuuminfusionsverfahrens mit Harz getränkt und anschließend ausgehärtet wird. Die Formen geben die Außenkontur der Halbschalen beziehungsweise des Rotorblatts vor. Diese Außenkontur ist entscheidend für die strukturellen und aerodynamischen Eigenschaften des Rotorblatts, insbesondere mit Hinblick auf die vorliegend beschriebene optimierte Verbindung im Bereich der Teilungsstelle.

Das Windenergieanlagenrotorblatt ist in zumindest zwei Rotorblattsegmente geteilt. Zwei oder mehr Teilungsstellen sind ebenso denkbar, wobei die weiteren Segmente analog zu dem beschriebenen Verbindungssystem mechanisch gekoppelt sein können.

Im Kontext der vorliegenden Offenbarung gelten die folgenden Definitionen:
Der Begriff "Profiltiefe" (beziehungsweise "Sehne" oder "Chord") definiert den Abstand von der Vorderkante bis zur Hinterkante eines Rotorblattprofils, das heißt von der Profilnasenkante zur Profilendkante, an einer beliebigen Stelle entlang der Längsachse. Dimensionen in diese Richtung können bei dieser Erfindung als größer oder geringer bezeichnet werden.

Weiterhin definiert der Begriff "Profildicke" (beziehungsweise "Profilhöhe") den maximalen Abstand zwischen der Saugseite und der Druckseite eines Rotorblattprofils, das heißt in einer Richtung senkrecht zur Profiltiefe und senkrecht zur Längsachse. Dimensionen in diese Richtung können bei dieser Erfindung als größere oder geringer bezeichnet werden.

Zusätzlich soll der Begriff "Länge" des Rotorblatts den Abstand zwischen dem Rotorblattanschluss und Rotorblattspitze in Richtung der Längsachse des Rotorblatts bezeichnen.

Das Verhältnis von Profildicke zu Profiltiefe, die sogenannte "relative Profildicke", ändert sich entlang der Länge des Rotorblatts. An der Rotorblattwurzel beträgt die relative Profildicke in der Regel 100 Prozent, und an der Rotorblattspitze kann sie 10 Prozent betragen.

Es sei darauf hingewiesen, dass durch die Bezugnahme auf den Segmentierungsbereich die Verbindungsbereiche mitumfasst sind. Nicht notwendigerweise umfasst der Segmentierungsbereich beide Verbindungsbereiche vollständig, was insbesondere nachfolgend noch erläutert wird. Die einfache Krümmung liegt demzufolge zumindest teilweise in den Verbindungsbereichen beider Rotorblattsegmente vor. Insbesondere soll durch Bezugnahme auf den Segmentierungsbereich zum Ausdruck kommen, dass Bereiche beider Rotorblattsegmente, das heißt ein Bereich um die Teilungsstelle herum, gemeint ist.

Erfindungsgemäß ist ein Anstieg einer Vorbiegung des Rotorblatts im Segmentierungsbereich entlang der Längsachse konstant. Insbesondere weist das Rotorblatt im Segmentierungsbereich keine beziehungsweise im Wesentlichen keine (das heißt im Rahmen von Fertigungstoleranzen) Krümmung als Folge einer Vorbiegung auf. Mit anderen Worten ist das Rotorblatt im Segmentierungsbereich nicht entlang der Längsachse in Richtung der Druckseite gebogen. Eine Mittellängsachse verläuft in diesem Bereich linear, das heißt geradlinig.

Gemäß einer Ausführungsform ist ein Twist des Rotorblatts im Segmentierungsbereich entlang der Längsachse konstant. Insbesondere liegt keine beziehungsweise im Wesentlichen keine (das heißt im Rahmen von Fertigungstoleranzen) Verdrehung des Rotorblatts um die Längsachse vor. Eine Profildicke des Rotorblatts ist im Segmentierungsbereich entlang der Längsachse konstant. Mit anderen Worten ändert sich die Profildicke in diesem Abschnitt nicht beziehungsweise im Wesentlichen nicht (das heißt im Rahmen von Fertigungstoleranzen).

Eine Profiltiefe des Rotorblatts ist im Segmentierungsbereich entlang der Längsachse konstant. Mit anderen Worten ändert sich die Profiltiefe in diesem Abschnitt nicht beziehungsweise im Wesentlichen nicht (das heißt im Rahmen von Fertigungstoleranzen).

Gemäß einer Ausführungsform bleiben im Segmentierungsbereich sämtliche geometrischen Abmessungen der Außenkontur des Rotorblatts konstant. Das bedeutet, dass über den gesamten Segmentierungsbereich identische Rotorblattprofile zur Ausbildung der aerodynamischen Hülle verwendet werden.

Die zuvor beschriebenen Ausführungsformen stellen bevorzugte Weiterbildungen der Erfindung dar, die die eingangs genannten Vorteile und Funktionen ermöglichen oder im besonderen Maße erzielen.

Gemäß einer Ausführungsform ist eine Profiltiefe im Segmentierungsbereich im Vergleich zu einer weiteren Profiltiefe in einem an den Segmentierungsbereich angrenzenden Bereich auf einer der Rotorblattnabe zugewandten Seite vergrößert.

Gemäß einer Ausführungsform ist eine Profildicke im Segmentierungsbereich im Vergleich zu einer weiteren Profiltiefe in einem an den Segmentierungsbereich angrenzenden Bereich des Rotorblatts auf einer der Rotorblattnabe zugewandten Seite vergrößert.

Bei dem angrenzenden Bereich der zuvor beschriebenen Weiterbildungen handelt es sich insbesondere um einen Bereich, der keine Verbindungsmittel wie die erwähnten Lagerhülsen oder dergleichen aufweist. Dadurch werden die strukturmechanischen beziehungsweise konstruktiven Eigenschaften für die Aufnahme von Kräften und Momenten an der Teilungsstelle verbessert. Bevorzugt wird gleichermaßen aufgedickt (Profildicke) und aufgeweitet (Profiltiefe). Dadurch wird ein besonders guter Kompromiss für die Anforderungen an die Strukturmechanik und Aerodynamik geschaffen.

Es ist optional denkbar, dass die Aufweitung und/oder die Aufdickung nach dem Segmentierungsbereich, das heißt auf der der Blattspitze zugewandten Seite, auf ein geringeres Maß reduziert wird.

Anders ausgedrückt werden durch die Aufdickung und/oder Aufweitung ein vergrößertes Profil und damit eine vergrößerte Rotorblattschale bewirkt.

Gemäß einer Ausführungsform weist jedes der beiden Rotorblattsegmente in dem jeweiligen Verbindungsbereich Verbindungsmittel zum Verbinden der beiden Rotorblattsegmente auf, wobei sich der Segmentierungsbereich entlang der Längsachse zumindest über die Verbindungsmittel erstreckt. Das heißt, der Segmentierungsbereich endet auf Höhe der Querschnitte des Rotorblatts, die sich an dem der Blattwurzel zugewandten Ende der Verbindungsmittel des ersten Rotorblattsegments beziehungsweise an dem der Blattspitze zugewandten Ende der Verbindungsmittel des zweiten Rotorblattsegments befinden.

Bevorzugt erstreckt sich der Segmentierungsbereich in Längsrichtung auf beiden Seiten über die zuvor beschriebenen Enden noch ein wenig hinaus, beispielsweise bis zu 20 cm oder 30 cm oder 40 cm oder 50 cm.

Gemäß einer Ausführungsform weist jedes der beiden Rotorblattsegmente in dem jeweiligen Verbindungsbereich Verbindungsmittel zum Verbinden der beiden Rotorblattsegmente auf, wobei sich der Segmentierungsbereich quer zu der Längsachse zumindest über die Verbindungsmittel erstreckt. Typischerweise sind in Umfangsrichtung des Rotorblattes die Verbindungsmittel nicht über den kompletten Umfang verteilt, sondern nur in jeweils einem bestimmten Abschnitt auf der Saug- und der Druckseite. Der Segmentierungsbereich erstreckt sich somit zumindest in Umfangsrichtung über diese Abschnitte. Mit anderen Worten ist nur ein Teil der oben definierten Querschnitte vom Segmentierungsabschnitt erfasst. Dadurch wird eine besonders zielgerichtete und effiziente Optimierung der Außenkontur beschrieben.

Gemäß einer Ausführungsform handelt es sich bei den Verbindungsmitteln um Lagerhülsen. Insbesondere handelt es sich um Gewindehülsen oder sogenannte Inserts mit einem Innengewinde.

Bei den Lagerhülsen handelt es sich beispielsweise um in die Anschlussenden der Blattsegmente einlaminierte Elemente. Es ist auch denkbar, dass die beiden Lagerhülsen durch Teilung einer Gesamthülse gebildet sind. In diesem Fall wird das Rotorblatt zunächst im Ganzen gefertigt, das heißt mit einteiliger Hülle beziehungsweise Schale, und anschließend an einer Teilungsstelle getrennt, etwa geschnitten oder gesägt. Die Trennung erfolgt im Bereich der Gesamthülsen, so dass pro Gesamthülse zwei Hülsenhälften entstehen, je eine für die beiden durch Teilung entstandenen Blattsegmente. Diese Hülsenhälften entsprechen den erwähnten ersten beziehungsweise zweiten Lagerhülsen. Die Lagerhülsen haben typischerweise eine Durchgangsbohrung beziehungsweise - öffnung, wobei sich der Querschnitt, Konturen, Wandstärke oder Weiteres über die Längsachse der Hülsen teilweise ändert oder variiert. Das heißt über die Länge weisen die Hülsen unterschiedliche Abschnitte auf. Die Hülsen beider Rotorblattsegmente werden über Schraubbolzenverbindungen miteinander verbunden.

Gemäß einer Ausführungsform sind die Verbindungsmittel besonders nah an der Außenseite des Rotorblatts angeordnet. Dadurch wird eine besonders bauraumgünstige Anordnung erreicht. Der Abstand ist beispielsweise abhängig von gewählten Insert- und Schrauben-/Schraubbolzengrößen. Beispielsweise ist ein Abstand zwischen Schraub(bolzen)längsachse und Rotorblattaußenhülle 50 mm.

Gemäß einer Ausführungsform erstreckt sich der Segmentierungsbereich ausgehend von der Teilungsstelle zu beiden Seiten entlang der Längsachse jeweils zwischen 0,5 m und 1,5 **m,** etwa über 1 **m.**

Gemäß einer Ausführungsform ist die Teilungsstelle im Bereich von 15 bis 40 % oder im Bereich von 60 bis 90 % der Länge ausgehend von einer Rotorblattnabe angeordnet. Beim ersten Bereich handelt es sich um einen rotorblattwurzelnahen Bereich, bei dem zweiten Bereich handelt es sich um einen rotorblattspitzennahen Bereich. In diesen Bereichen sind die im Bereich der Teilungsstelle zu übertragenden Lasten bezogen auf den zur Verfügung stehenden Bauraum im Gegensatz zu dem Blattmittelbereich (40 bis 60 %) für eine Teilung besonders günstig. Im wurzelnahen Bereich könnte beispielsweise auf die oben erwähnte Aufdickung und/oder Aufweitung verzichtet werden, da die vorhandene Profildicke ausreichend ist.

Gemäß einem zweiten Aspekt wird ein Rotorblattsegment für ein geteiltes Rotorblatt einer Windenergieanlage offenbart. Das Rotorblattsegment weist ein erstes Anschlussende mit einem ersten Verbindungsbereich entlang der Längsachse auf, wobei das erste Anschlussende einem zweiten Anschlussende eines weiteren Rotorblattsegments zum Verbinden zugeordnet ist, wobei in dem ersten Verbindungsbereich die Außenkontur des Rotorblatts einfach gekrümmt ist.

Das Rotorblatt ermöglicht die oben genannten Vorteile und Funktionen. Oben beschriebene Ausführungsformen gelten - soweit zutreffend - analog.

Weitere Vorteile, Merkmale und Weiterbildungen ergeben sich aus dem nachfolgenden, in Verbindung mit den Figuren erläuterten Ausführungsbeispiel. Gleiche, gleichartige oder gleich wirkende Elemente sind in den Figuren mit den gleichen Bezugszeichen versehen. Aus Gründen der Übersichtlichkeit sind gegebenenfalls nicht alle beschriebenen Elemente in sämtlichen Figuren mit zugehörigen Bezugszeichen gekennzeichnet.

In den Figuren zeigen:
Figur 1 eine schematische Darstellung einer Windenergieanlage,
Figur 2 eine schematische, perspektivische Darstellung eines geteilten Rotorblatts mit zwei Rotorblattsegmenten,
Figuren 3 bis 10 Ansichten eines ungeteilten Rotorblattes gemäß dem Stand der Technik,
Figur 11 eine schematische Detailansicht eines geteilten Rotorblattes gemäß einem Ausführungsbeispiel der Erfindung,
Figur 12 eine schematische Längsschnittansicht des Rotorblatts gemäß Figur 11,
Figur 13 eine schematische, perspektivische Ansicht eines geteilten Rotorblattes gemäß einem Ausführungsbeispiel der Erfindung,
Figur 14 eine schematische, perspektivische Ansicht eines geteilten Rotorblattes gemäß einem weiteren Ausführungsbeispiel der Erfindung,
Figur 15 eine schematische, perspektivische Ansicht eines Querschnitts eines geteilten Rotorblattes gemäß der Figuren 13 und 14,
Figur 16 eine schematische Diagrammdarstellung mit drei Graphen eines Rotorblatts gemäß Ausführungsbeispielen der Erfindung, und
Figuren 17 und 18 zwei schematische Diagrammdarstellungen zur Ermittlung einer Teilungsstelle eines Rotorblatts gemäß einem Ausführungsbeispiel der Erfindung.

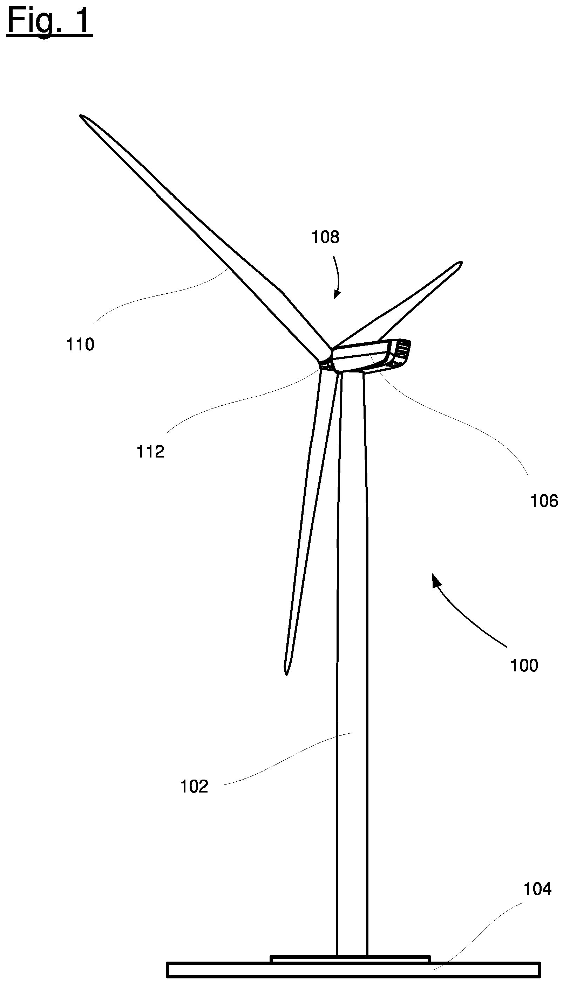

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

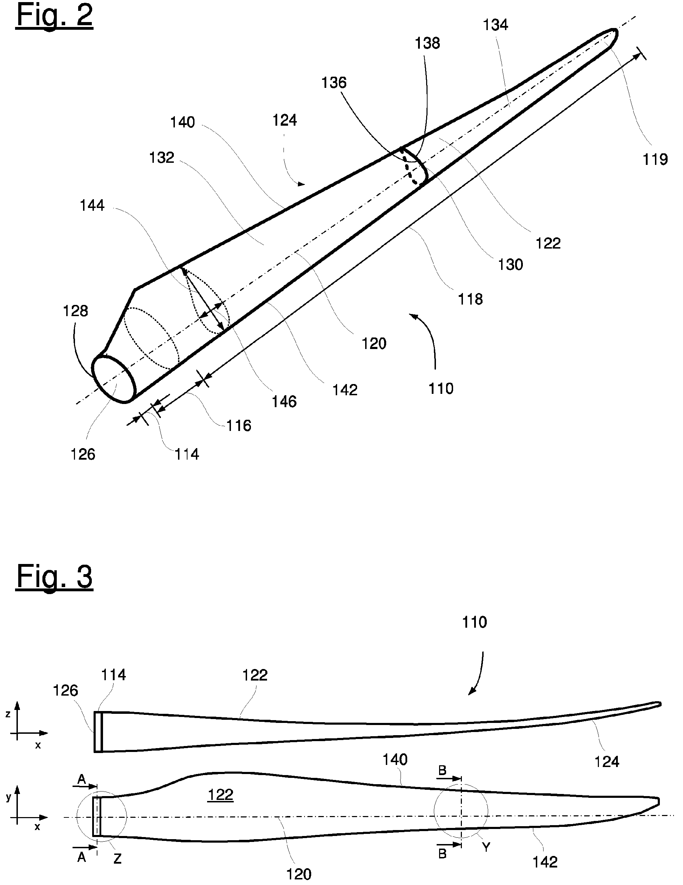

Figur 2 zeigt ein Windenergieanlagenrotorblatt 110. Das Rotorblatt 110 weist die Form eines herkömmlichen Rotorblattes auf und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Blattspitze 119. Das Rotorblatt 110 hat bezüglich einer Längserstreckungsrichtung 120 eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils ein Anschlussende 136, 138 (auch Rotorblattsegmentanschluss genannt) auf. Das Rotorblatt 110 ist somit ein geteiltes Rotorblatt wie eingangs beschrieben. An jedem Anschlussende 136, 138 ist eine Vielzahl von Lagerhülsen (nicht dargestellt) angeordnet, die jeweils ein Innengewinde für die Aufnahme von Schraubbolzen, auch Lagerbolzen oder Verbindungsbolzen genannt, aufweisen. Ein Anschlussende 136, 138 ist beispielsweise als ein Flanscheinleger realisiert, welcher als Einlegeteil in eine Fertigungsform zur Herstellung des Rotorblattes 110 eingelegt wird. Es ist jedoch auch denkbar, dass kein Flanscheinleger vorgesehen ist und die Lagerhülsen direkt in die Rotorblatthalbschalen eingebettet und einlaminiert sind. Bei den Lagerhülsen handelt es sich beispielsweise um Stahlhülsen.

Das Rotorblatt 110 (und damit die Segmente 132, 134) hat eine Profilendkante 140 und eine Profilnasenkante 142. Eine Profiltiefe 144 ist als Abstand von der Profilendkante 140 zur Profilnasenkante 142 bezüglich eines Profilquerschnitts definiert. Eine Profildicke 146 ist als ein Abstand von der Druckseite 122 zur Saugseite 124 definiert, wobei im vorliegenden Kontext die maximale Profildicke eines Profilquerschnitts gemeint sein soll. Die Profildicke 146 wird rechtwinklig zur Längsachse 120 und zur Profiltiefe 144 gemessen. Ein (Profil-)Querschnitt liegt in einer Ebene normal zur Längsachse 120.

Im Folgenden wird die Verbindung beider Rotorblattsegmente 132, 134 genauer beschrieben, wobei zunächst Erläuterungen an einem ungeteilten beziehungsweise hypothetisch geteilten Rotorblatt dargelegt werden.

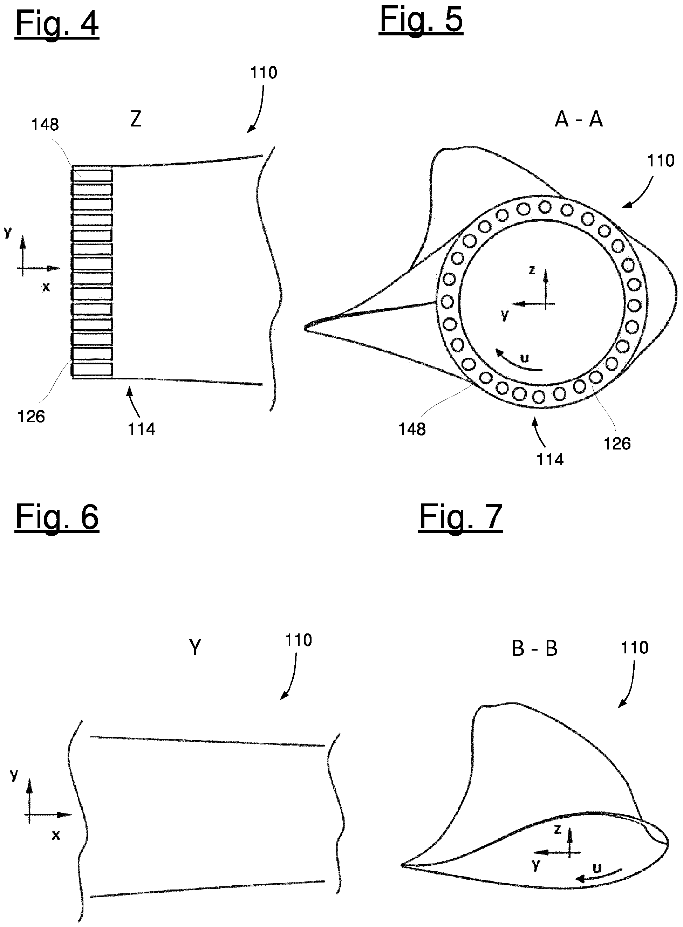

Figur 3 zeigt zwei Ansichten eines ungeteilten Rotorblatts 110 gemäß dem Stand der Technik mit eingezeichneten Koordinatensystemen. Die obere Darstellung der Figur 3 zeigt eine Ansicht auf die Profilnasenkante 142 und die untere Darstellung zeigt eine Ansicht auf die Druckseite 122. Die Längsachse 120 entspricht der x-Richtung des eingezeichneten Koordinatensystems. Die untere Ansicht der Figur 3 ist bezüglich der oberen Ansicht um 90° um die Längsachse beziehungsweise x-Achse verdreht. Figuren 4 bis 7 zeigen Detailansichten Y und Z sowie Schnittansichten gemäß der Schnitte A-A und B-B des Rotorblatts 110 gemäß Figur **3****.**

Figur 3 stellt schematisch eine aerodynamische Hülle des ungeteilten Rotorblattes dar. Zu erkennen ist in Detail Z (Figur 4) und Schnitt A-A (Figur 5) der einfach gekrümmte Blattanschluss beziehungsweise das Rotorblattanschlussende 126. Aufgrund des kreisförmigen Blattanschlusses an der Blattwurzel beziehungsweise dem Blattwurzelbereich 114 und den typischerweise geraden Verbindungsmitteln (Lagerhülsen 148 für Bolzenverbindungen) enthält dieser Bereich nur eine einfache konstante Krümmung im Umfangsrichtung u, sowie keine Krümmung in Blattlängsrichtung. Eine Krümmung bezüglich der x-Richtung ist demnach Null, während eine Krümmung in Umfangsrichtung u ungleich Null ist. Eine Schnittstelle auf Seiten der Rotornabe 112 wäre typischerweise identisch kreisförmig.

Im Detail Y (Figur 6) und Schnitt B-B (Figur 7) ist ein Bereich des Rotorblatts in Richtung der Blattspitze dargestellt, in welchem sich eine mögliche Teilungsstelle L befindet. Im Bereich der möglichen Teilungsstelle L weist die aerodynamische Hülle (Rotorblattschale) in allen Raumrichtungen eine nicht konstante Krümmung, insbesondere ungleich Null, auf. Eine Krümmung bezüglich der x-Richtung sowie eine Krümmung in Umfangsrichtung u sind jeweils ungleich Null. Zudem ist das Rotorblatt 110 um die Längsachse beziehungsweise x-Achse verdreht.

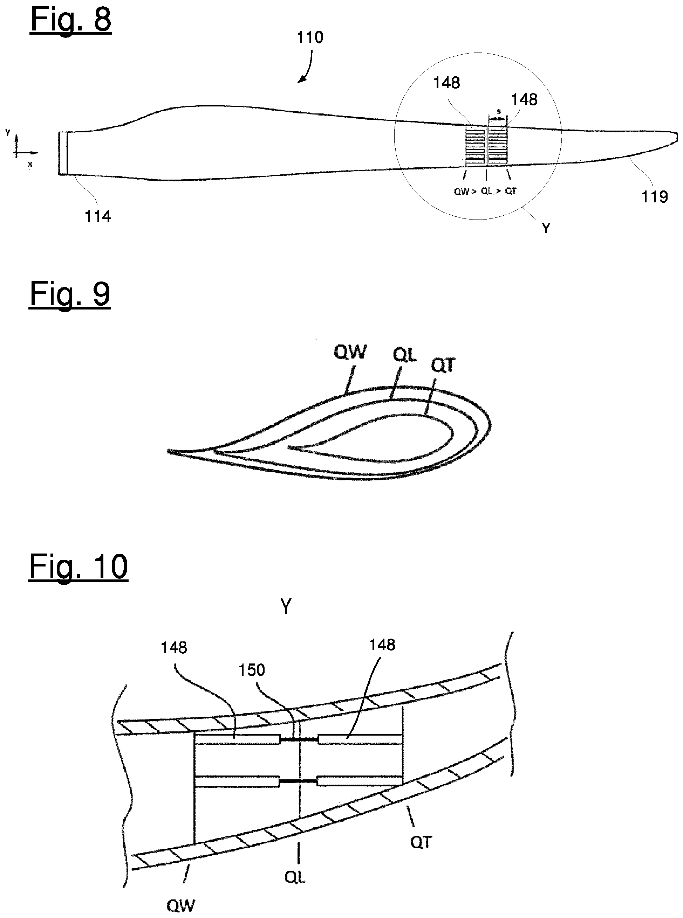

Aufgrund einer definierten Länge s der Lagerhülsen 148 (und der Längsbolzen) würde eine Einbettung von Lagerhülsen 148 an dieser Teilungsstelle L nicht optimal sein. Dies ist verdeutlicht anhand der Figuren 8 bis 10. Figur 8 zeigt dabei die Ansicht von der Druckseite 122 gemäß Figur 3, wobei das Rotorblatt 110 im Bereich der Teilungsstelle L aufgebrochen dargestellt ist. Im Bereich der Teilungsstelle L, in welchem die Lagerhülsen 148 angeordnet sind, weist das Rotorblatt 110 unterschiedliche Profil-Querschnitte der Außenkontur beziehungsweise Schale auf, wovon exemplarisch drei Profil-Querschnitte QW, QL, QT herausgegriffen und in Figur 9 vergrößert und übereinander gelagert dargestellt sind. Bei dem ersten Querschnitt QW handelt es sich um einen Querschnitt im rotorblattwurzelseitigen Rotorblattsegment mit gewissem Abstand zur Teilungsstelle **L.** Beim zweiten Querschnitt QL handelt es sich um den an der Teilungsstelle L vorliegenden Querschnitt. Bei dem dritten Querschnitt QT handelt es sich um einen Querschnitt im rotorblattspitzenseitigen Rotorblattsegment mit gewissem Abstand zur Teilungsstelle L in Richtung der Rotorblattspitze 119.

Für die Einbringung der Lagerhülsen 148 in das Rotorblatt 110, die paarweise mittels Bolzen 150 verbunden sind, könnte nur der Bauraum im kleinsten, also rotorblattspitzenseitigen Querschnitt QT ausgenutzt werden, statt dem strukturmechanisch günstigeren rotorblattwurzelseitigen Querschnitt QW (siehe Figur 10). Dies liegt daran, dass eine derartige mechanische Verbindung in beiden Rotorblattsegmenten eine identische Anzahl und eine identische Ausrichtung der Bolzen 150 und Hülsen 148 voraussetzt. So würde der bauraumungünstigste, am weitesten zur Rotorblattspitze gelegene Querschnitt QT im Bereich der Teilungsstelle L die Anzahl an Lagerhülsen 148 und deren Ausrichtung definieren. Das wäre strukturmechanisch und konstruktiv ein sehr ungünstiges Szenario.

Ebenfalls wäre aufgrund der Vorbiegung des Rotorblattes eine Teilung parallel zum Blattflansch, wie es normalerweise im Wurzelbereich gängig ist, aufgrund der Vorbiegung hochgradig verschwenderisch im Sinne einer optimierten Bauraumausnutzung.

Bei den nachfolgenden Ausführungsbeispielen der Erfindung ist vorgesehen, das Rotorblatt 110 in einem bauraumoptimalen Winkel zu teilen und das Rotorblatt 110 beziehungsweise die Rotorblattsegmente 132, 134 derart auszubilden, dass eine Außenkontur 152 des Rotorblatts 110 einfach gekrümmt ist. Hinsichtlich der Hauptabmessungen eines segmentierten Rotorblattes wie Teilungslänge, Teilungswinkel, Schnittgestalt, Länge der Bolzenpaarung und Anzahl der Lagerhülsen (auch Inserts) kann so eine doppelt gekrümmte Rotorblattkontur auf einen strukturmechanisch und konstruktiv optimierten einfach gekrümmten Bereich überführt werden.

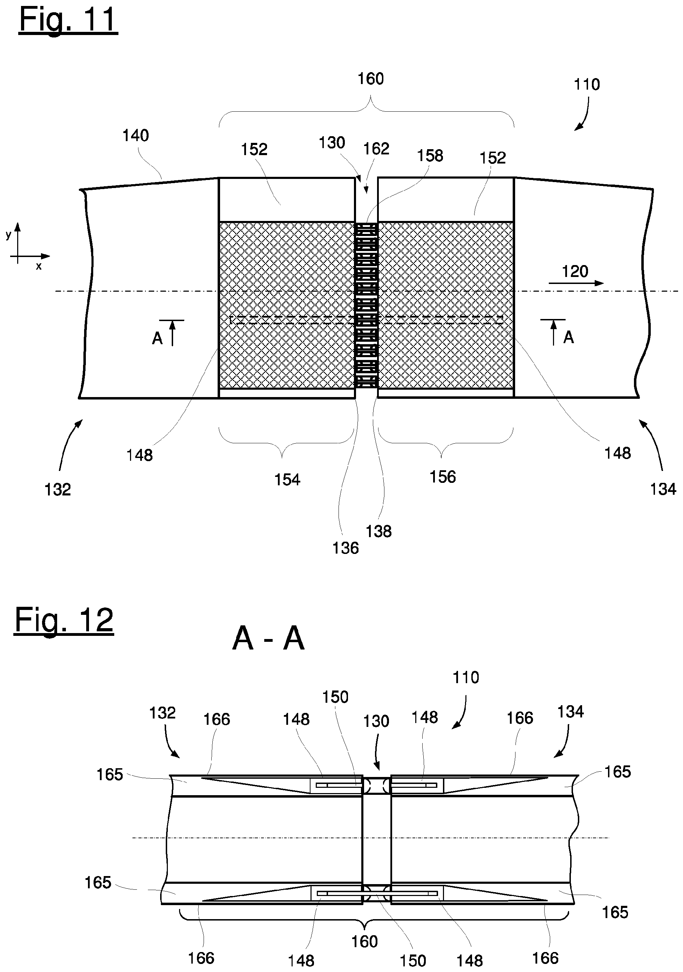

Figur 11 zeigt ein Ausführungsbeispiel der Erfindung, wobei das Rotorblatt 110 im Bereich der Teilungsstelle 130 dargestellt ist. Das erste Rotorblattsegment 132 hat das erste Anschlussende 136 mit einem ersten Verbindungsbereich 154. Der erste Verbindungsbereich 154 erstreckt sich entlang der Längsachse 120 zumindest über die im ersten Anschlussende 136 eingebetteten Lagerhülsen 148 (in Figur 11 ist ein Lagerhülsenpaar schematisch angedeutet). Analog weist das zweite Rotorblattsegment 134 das zweite Anschlussende 138 mit einem zweiten Verbindungsbereich 156 auf. Das zweite Anschlussende 138 beziehungsweise der zweite Verbindungsbereich 156 sind dem ersten Anschlussende 136 beziehungsweise dem ersten Verbindungsbereich 154 zugeordnet. Die beiden Verbindungsbereiche 154, 156 sind an der Teilungsstelle 130 des Rotorblatts 110 über Bolzenverbindungen 158 (umfassen Hülsen und Bolzen) verbunden und bilden einen gemeinsamen Segmentierungsbereich 160. Der Segmentierungsbereich 160 erstreckt sich entlang der Längsachse 120 beziehungsweise der x-Richtung zumindest über die Bolzenverbindungen 158, das heißt die verwendeten Bolzen 150 und Lagerhülsen 148. Quer zur Längsachse, das heißt in y-Richtung, deckt der Segmentierungsbereich 160 zumindest ebenfalls die Bolzenverbindungen 158 ab. Wie anhand der Figur 11 zu erkennen ist, sind die Bolzenverbindungen 158 in y-Richtung (oder Umfangsrichtung) nicht über die gesamte Profiltiefe angeordnet.

In diesem Segmentierungsbereich 160 des Rotorblatts 110 ist die durch die Verbindung beider Rotorblattsegmente 132, 134 gebildete gemeinsame Außenkontur 152 des Rotorblatts 110, die lediglich durch einen kleinen Spalt 162 unterbrochen ist, einfach gekrümmt.

Im Falle des Ausführungsbeispiels gemäß Figur 11 verbleiben die Profildicke und die Profiltiefe im Segmentierungsbereich konstant. Ein Anstieg der Vorbiegung des Rotorblatts 110 ist entlang der Längsachse (x-Richtung) im Segmentierungsbereich 160 konstant, das heißt die Vorbiegung ist "eingefroren" und das Rotorblatt weist in x-Richtung keine Krümmung auf. Im Segmentierungsbereich 160 ist weiterhin vorgesehen, dass der Twist der Querschnittsprofile keine Änderung über die Länge des Segmentierungsbereichs 160 erfährt. Mit anderen Worten ist das Rotorblatt 110 in diesem Bereich hinsichtlich der erwähnten Parameter linearisiert.

Im Segmentierungsbereich 160 weist das Rotorblatt 110 über beide Segmente 132, 134 hinweg somit eine einfach gekrümmte Außenkontur 152 auf.

Um die Anzahl an implementierbaren Inserts beziehungsweise Lagerhülsen 148 zu erhöhen, kann die Profildicke der Querschnittsprofile im Segmentierungsbereich 160 vergrößert werden. Vorzugsweise geschieht dies aerodynamisch maßstabsgerecht, so dass neben der Profildicke auch die Profiltiefe gleichermaßen vergrößert wird.

Figur 12 stellt einen Längsschnitt des Rotorblatts 110 gemäß Figur 11 dar. Die Lagerhülsen 148 sind besonders nah an der Außenseite 166 der Rotorblattsegmente 132, 134 in der Rotorblattschale 165 angeordnet. Dies heißt, dass die Bolzenpaarungen direkt an der Blatthülle anliegen und so der Bauraum optimal ausgenutzt wird. Dies gilt optional auch analog für die bereits beschriebenen Ausführungsbeispiele.

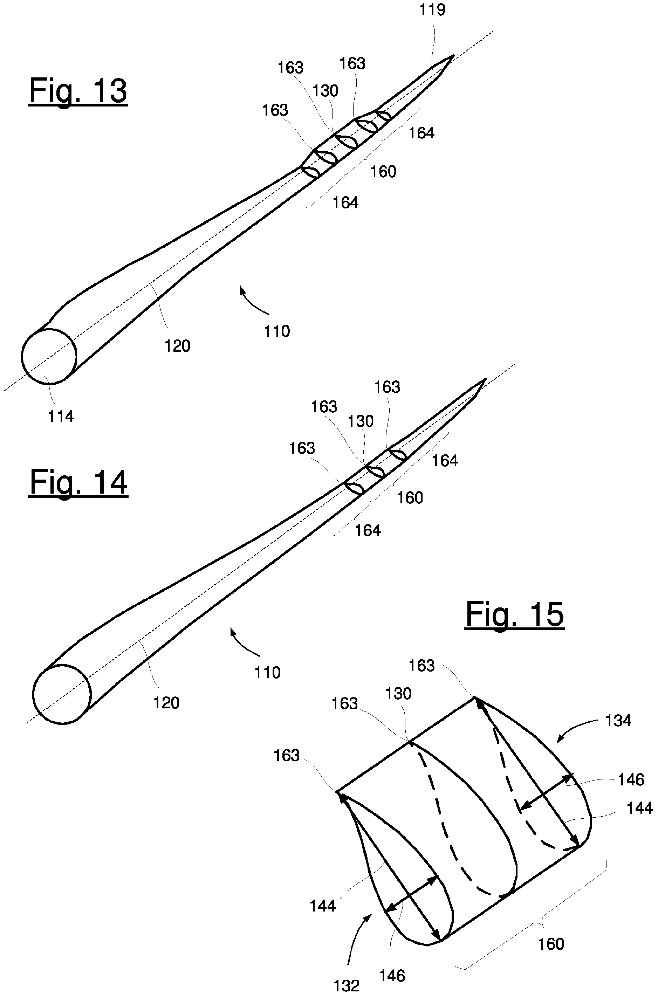

Die Figuren 13 und 14 zeigen Ausführungsbeispiele eines Rotorblatts 110 mit solch einer Rotorblatt-Außenkontur 152 und dadurch einem optimierten Segmentierungsbereich 160. In beiden Ausführungsbeispielen weist die Außenkontur des Segmentierungsbereichs eine einfache Krümmung auf. Es ist zu erkennen, dass alle Profilquerschnitte 163 im Segmentierungsbereich 160 die gleiche Profildicke und Profiltiefe aufweisen. Das Rotorblatt 110 hat im Segmentierungsbereich 160 einen konstanten Anstieg der Vorbiegung und keinen Twist. In Figur 13 ist die Profildicke und die Profiltiefe im Segmentierungsbereich 160 im Vergleich zu Bereichen 164 entlang der Längsachse 120, die ausgehend vom Blattwurzelbereich 114 in Richtung Blattspitze 119, direkt vor beziehungsweise direkt nach dem Segmentierungsbereich 160 angrenzen, deutlich vergrößert. Durch die Aufdickung werden die zu tragenden Lasten erniedrigt (vergleiche Satz von Steiner). In Figur 14 weisen ebenfalls alle Profilquerschnitte 163 im Segmentierungsbereich 160 die gleiche Profildicke und Profiltiefe auf. Die Profildicke 146 und die Profiltiefe 144 entsprechen hierbei dem am weitesten in Richtung Rotorblattwurzel 114 angeordneten Profil des Segmentierungsbereichs, **d.h.** der Segmentierungsbereich ist nicht aufgedickt.

Figur 15 zeigt den Segmentierungsbereich 160 der Rotorblätter aus den Figuren 13 und 14. Die Rotorblattdicke 146 und die Rotorblatttiefe 144 sind konstant, der Segmentierungsbereich weist einen konstanten Anstieg der Vorbiegung und keinen Twist auf.

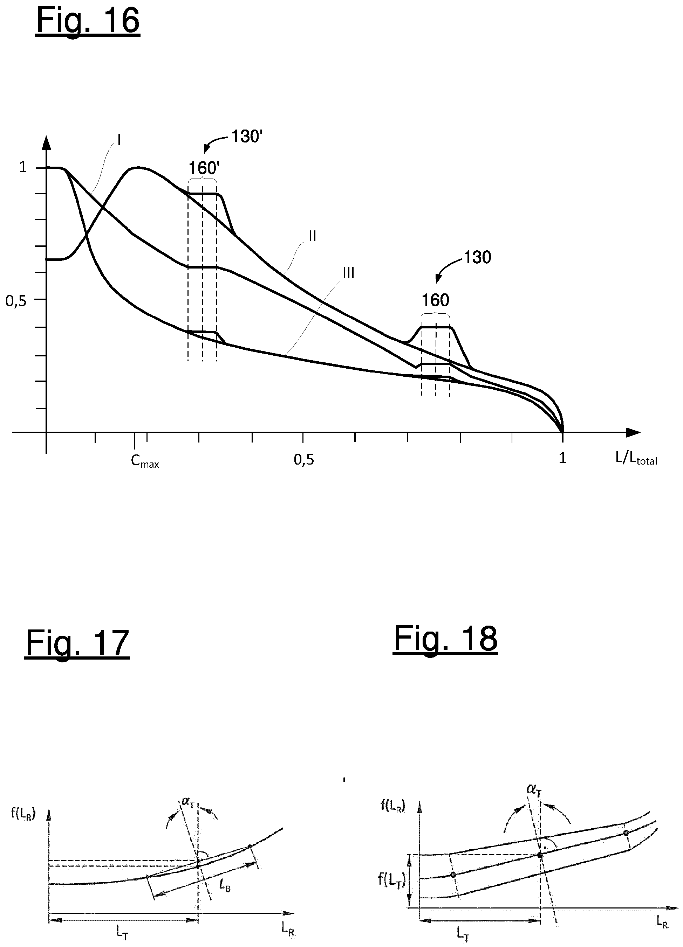

Figur 16 zeigt eine schematische Diagrammdarstellung, wobei drei Verläufe I, II und III dargestellt sind. Graph I betrifft die Verteilung der Profildicke, Graph II die Verteilung der Profiltiefe und Graph III die Verteilung der relativen Profildicke jeweils über die Länge eines Rotorblatts, wobei zwei mögliche Teilungsstellen 130 und 130' und entsprechende Segmentierungsbereiche 160 beziehungsweise 160' dargestellt sind. Zu erkennen ist, dass bei der wurzelnahen Teilungsstelle 130' keine Aufdickung des Rotorblattprofils vorliegt. Die Profildicke 146 bleibt im Segmentierungsbereich konstant. Da die Profiltiefe ebenfalls konstant ist, bleibt auch die relativer Profildicke im Segmentierungsbereich 160' konstant bleibt. Bei der möglichen spitzennahen Teilungsstelle 130 liegt eine Aufdickung des Rotorblattprofils vor. Die Profildicke ist erhöht und über den Segmentierungsbereich 160 konstant. Gleiches gilt für die Profiltiefe. Die relative Profildicke bleibt konstant. Selbstverständlich kann bei beiden oder keiner der Teilungsstellen eine solche Aufdickung vorliegen. Weiterhin ist anhand des Graphen II der Figur 16 zu erkennen, dass die Teilungsstellen 130, 130' hinter einer Rotorblattposition mit einer maximalen Profiltiefe Cₘₐₓ liegen.

Es sei an dieser Stelle erwähnt, dass ein Rotorblatt gemäß einem der beschriebenen Ausführungsbeispiele auch zwei oder mehr Teilungsstellen haben kann.

Zur Ermittlung einer optimalen Teilungsstelle sei auf die Figuren 17 und 18 verwiesen, die zwei Diagrammdarstellungen darstellen.

Figur 17 zeigt das Rotorblatt 110 vereinfacht anhand seiner Vorbiegung f(L_{R}), wobei L_{R} die Rotorblattlänge, L_{T} die Teilungsposition und f(L_{R}) die Höhe der Vorbiegung darstellt. So ist also die Länge L_{B} der Bolzenpaarung bekannt und wird mit ihren Endpunkten auf diese Vorbiegungslinie gelegt, sodass der Mittelpunkt der Bolzenpaarungslänge genau auf der Schnittlinie L_{T} liegt, um die genaue Teilungslänge zu gewährleisten. Der Teilungswinkel α_{T} wird nun beschrieben durch das Lot auf der Bolzenpaarungslänge gemessen zur Senkrechten der Teilungsposition L_{T}. Der Teilungswinkel α_{T} befindet sich so im Normalfall ±2° zum Winkel, der bei einer Teilung senkrecht zur Vorbiegung entstehen würde.

Weiterführend kann nun in dieses Diagramm ebenfalls die Rotorblattaußenkontur 152 eingezeichnet werden und so der nun im Teilungsbereich geraden beziehungsweise konstanten Vorbiegung angepasst werden. So zeigt Figur 18 qualitativ eine bauraumoptimierte Vorbiegung eines segmentierten Rotorblattes 110 in Längsrichtung. Die Hauptabmessung α_{T} ist nun bestimmt und gilt als optimierte Schnittgestalt im Segmentierungsbereich 160. Diese Hauptabmessung αT bestimmt maßgeblich den Bauraum für die zu implementierenden Bolzenpaarungen.

### Bezugszeichenliste

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 119: Blattspitze
- 120: Längserstreckungsrichtung
- 122: Druckseite
- 124: Saugseite
- 126: Rotorblattanschlussende
- 128: Flanschanschluss
- 130: Teilungsstelle
- 130': Teilungsstelle
- 132: erstes Rotorblattsegment
- 134: zweites Rotorblattsegment
- 136: erstes Anschlussende
- 138: zweites Anschlussende
- 140: Profilendkante
- 142: Profilnasenkante
- 144: Profiltiefe
- 146: Profildicke
- 148: Lagerhülse
- 150: Bolzen
- 152: Außenkontur
- 154: erster Verbindungsbereich
- 156: zweiter Verbindungsbereich
- 158: Bolzenverbindung
- 160: Segmentierungsbereich
- 160': Segmentierungsbereich
- 162: Spalt
- 163: Profilquerschnitt
- 164: Bereich
- 165: Rotorblattschale
- 166: Außenseite
- A-A: Schnitt
- B-B: Schnitt
- I: erster Graph
- II: zweiter Graph
- L: mögliche Teilungsstelle
- s: Länge einer Lagerhülse
- u: Umfang
- Y: Detailansicht
- Z: Detailansicht

## Patentansprüche

1. Geteiltes Rotorblatt (110) für eine Windenergieanlage (100), welches bezogen auf eine Längsachse (120) des Rotorblatts (110) durch zumindest ein erstes Rotorblattsegment (132) und ein zweites Rotorblattsegment (134) gebildet ist, wobei
das erste Rotorblattsegment (132) an einem ersten Anschlussende (136) einen ersten Verbindungsbereich (154), insbesondere entlang der Längsachse (120), aufweist und das zweite Rotorblattsegment (134) an einem zweiten Anschlussende (138), welches dem ersten Anschlussende (136) zugeordnet ist, einen zweiten Verbindungsbereich (156), insbesondere entlang der Längsachse (120), aufweist,
die beiden Verbindungsbereiche (154, 156) an einer Teilungsstelle (130) des Rotorblatts (110) verbunden sind und einen gemeinsamen Segmentierungsbereich (160) ausbilden,
in dem Segmentierungsbereich (160) des Rotorblatts (110) eine durch die Verbindung beider Rotorblattsegmente (132, 134) gebildete gemeinsame Außenkontur (152) des Rotorblatts (110) einfach gekrümmt ist, wobei ein Anstieg einer Vorbiegung des Rotorblatts (110) im Segmentierungsbereich (160) entlang der Längsachse (120) konstant ist, **dadurch gekennzeichnet, dass**
die gemeinsame Außenkontur (152) im Segmentierungsbereich (160) einfach gekrümmt ist, um nur eine Krümmung quer zur Längsachse (120) zu definieren, und
das geteilte Rotorblatt (110) eine Profildicke (146) und eine Profiltiefe (144) aufweist, die im Segmentierungsbereich (160) konstant ist.

2. Geteiltes Rotorblatt (110) nach Anspruch 1,
wobei ein Twist des Rotorblatts (110) im Segmentierungsbereich (160) entlang der Längsachse (120) konstant ist.

3. Geteiltes Rotorblatt (110) nach einem der vorhergehenden Ansprüche,
wobei im Segmentierungsbereich (160) sämtliche geometrischen Abmessungen der Außenkontur (152) des Rotorblatts (110) konstant sind.

4. Geteiltes Rotorblatt (110) nach einem der vorhergehenden Ansprüche,
wobei eine Profiltiefe (144) im Segmentierungsbereich (160) im Vergleich zu einer weiteren Profiltiefe in einem an den Segmentierungsbereich (160) angrenzenden Bereich (164) auf einer der Rotorblattnabe (112) zugewandten Seite vergrößert ist.

5. Geteiltes Rotorblatt (110) nach einem der vorhergehenden Ansprüche,
wobei eine Profildicke (146) im Segmentierungsbereich (160) im Vergleich zu einer weiteren Profiltiefe in einem an den Segmentierungsbereich (160) angrenzenden Bereich (164) des Rotorblatts (110) auf einer der Rotorblattnabe (112) zugewandten Seite vergrößert ist.

6. Geteiltes Rotorblatt (110) nach einem der vorhergehenden Ansprüche,
wobei jedes der beiden Rotorblattsegmente (132, 134) in dem jeweiligen Verbindungsbereich (154, 156) Verbindungsmittel zum Verbinden der beiden Rotorblattsegmente (132, 134) aufweist, wobei sich der Segmentierungsbereich (160) entlang der Längsachse (120) zumindest über die Verbindungsmittel erstreckt.

7. Geteiltes Rotorblatt (110) nach einem der vorhergehenden Ansprüche,
wobei jedes der beiden Rotorblattsegmente (132, 134) in dem jeweiligen Verbindungsbereich (154, 156) Verbindungsmittel zum Verbinden der beiden Rotorblattsegmente (132, 134) aufweist, wobei sich der Segmentierungsbereich (160) quer zu der Längsachse (120) zumindest über die Verbindungsmittel erstreckt.

8. Geteiltes Rotorblatt (110) nach einem der Ansprüche 6 oder 7,
wobei es sich bei den Verbindungsmitteln um Lagerhülsen (148) handelt.

9. Geteiltes Rotorblatt (110) nach einem der vorhergehenden Ansprüche,
wobei sich der Segmentierungsbereich (160) ausgehend von der Teilungsstelle (130) zu beiden Seiten entlang der Längsachse (120) jeweils über einen 1 m erstreckt.

10. Geteiltes Rotorblatt (110) nach einem der vorhergehenden Ansprüche,
wobei die Teilungsstelle (130) im Bereich von 15 bis 40 % oder im Bereich von 60 bis 90 % der Länge des Rotorblatts (110) ausgehend von einem Rotorblattanschlussende (126) angeordnet **ist.**

11. Rotorblattsegment (132) für ein geteiltes Rotorblatt (110) einer Windenergieanlage (100) nach einem der vorhergehenden Ansprüche, aufweisend ein erstes Anschlussende (136) mit einem ersten Verbindungsbereich (154) entlang der Längsachse (120), wobei das erste Anschlussende (136) einem zweiten Anschlussende (138) eines weiteren Rotorblattsegments (134) zum Verbinden zugeordnet ist, wobei in dem ersten Verbindungsbereich (154) die Außenkontur des Rotorblatts (110) einfach gekrümmt ist.

## Claims

1. A segmented rotor blade (110) for a wind turbine (100), which, with respect to a longitudinal axis (120) of the rotor blade (110), is formed by at least one first rotor blade segment (132) and one second rotor blade segment (134), wherein
the first rotor blade segment (132) has at a first connection end (136) a first connecting region (154), in particular along the longitudinal axis (120), and the second rotor blade segment (134) has at a second connection end (138), which is associated with the first connection end (136), a second connecting region (156), in particular along the longitudinal axis (120),
the two connecting regions (154, 156) are connected at a segmentation point (130) of the rotor blade (110) and form a common segmentation region (160),
in the segmentation region (160) of the rotor blade (110), a common outer contour (152) of the rotor blade (110), which is formed by the connection of both rotor blade segments (132, 134), is singly curved, wherein an ascent slope of a pre-bending of the rotor blade (110) is constant along the longitudinal axis (120) in the segmentation region (160), **characterized by** that
the common outer contour (152) is singly curved in the segmentation region (160) to define only a curvature transverse to the longitudinal axis (120), and
the segmented rotor blade (110) has a profile thickness (146) and a profile depth (144), which are constant in the segmentation region (160).

2. The segmented rotor blade (110) as claimed in claim 1,
wherein a twist of the rotor blade (110) is constant along the longitudinal axis (120) in the segmentation region (160).

3. The segmented rotor blade (110) as claimed in one of the preceding claims,
wherein all the geometrical dimensions of the outer contour (152) of the rotor blade (110) are constant in the segmentation region (160).

4. The segmented rotor blade (110) as claimed in one of the preceding claims,
wherein a profile depth (144) in the segmentation region (160) is increased in comparison with a further profile depth in a region (164) on a side facing toward the rotor blade hub (112), which region is adjacent to the segmentation region (160).

5. The segmented rotor blade (110) as claimed in one of the preceding claims,
wherein a profile thickness (146) in the segmentation region (160) is increased in comparison with a further profile thickness in a region (164) of the rotor blade (110) on a side facing toward the rotor blade hub (112), which region is adjacent to the segmentation region (160).

6. The segmented rotor blade (110) as claimed in one of the preceding claims,
wherein each of the two rotor blade segments (132, 134) has in the respective connecting region (154, 156) connection means for connecting the two rotor blade segments (132, 134), wherein the segmentation region (160) extends along the longitudinal axis (120) at least over the connection means.

7. The segmented rotor blade (110) as claimed in one of the preceding claims,
wherein each of the two rotor blade segments (132, 134) has in the respective connecting region (154, 156) connection means for connecting the two rotor blade segments (132, 134),
wherein the segmentation region (160) extends perpendicularly to the longitudinal axis (120) at least over the connection means.

8. The segmented rotor blade (110) as claimed in either of claims 6 or 7,
wherein the connection means are bearing sleeves (148).

9. The segmented t rotor blade (110) as claimed in one of the preceding claims,
wherein, proceeding from the segmentation point (130), the segmentation region (160), on both sides, extends in each case over 1 m along the longitudinal axis (120).

10. The segmented rotor blade (110) as claimed in one of the preceding claims,
wherein the segmentation point (130) is arranged in the region from 15 to 40% or in the region from 60 to 90% of the length of the rotor blade (110), proceeding from a rotor blade connection end (126).

11. A rotor blade segment (132) for a segmented rotor blade (110) of a wind turbine (100), having a first connection end (136) with a first connecting region (154) along the longitudinal axis (120), wherein the first connection end (136) is associated with a second connection end (138) of a further rotor blade segment (134) for connection purposes,
wherein the outer contour of the rotor blade (110) is singly curved in the first connecting region (154).

## Revendications

1. Pale de rotor divisée (110) pour une éolienne (100) formée, par rapport à un axe longitudinal (120) de la pale de rotor (110), par au moins un premier segment de pale de rotor (132) et un deuxième segment de pale de rotor (134), sachant que
le premier segment de pale de rotor (132) comprend une première zone de liaison (154), en particulier le long de l'axe longitudinal (120), à une première extrémité de raccordement (136), et le deuxième segment de pale de rotor (134) comprend une deuxième zone de liaison (156), en particulier le long de l'axe longitudinal (120), à une deuxième extrémité de raccordement (138) associée à la première extrémité de raccordement (136),
les deux zones de liaison (154, 156) sont reliées à un point de division (130) de la pale de rotor (110) et forment une zone de segmentation commune (160),
dans la zone de segmentation (160) de la pale de rotor (110), un contour extérieur commun (152) de la pale de rotor (110), formé par la liaison des deux segments de pale de rotor (132, 134), est simplement incurvé, une augmentation d'une précourbure de la pale de rotor (110) dans la zone de segmentation (160) étant constante le long de l'axe longitudinal (120), **caractérisé en ce que**
le contour extérieur commun (152) est simplement incurvé dans la zone de segmentation (160) pour définir une seule courbure transversale à l'axe longitudinal (120), et
la pale de rotor divisée (110) comprend une épaisseur de profil (146) et une profondeur de profil (144) qui sont constantes dans la zone de segmentation (160).

2. La pale de rotor divisée (110) selon la revendication 1,
sachant qu'une torsion de la pale de rotor (110) dans la zone de segmentation (160) est constante le long de l'axe longitudinal (120).

3. La pale de rotor divisée (110) selon l'une des revendications précédentes,
sachant que toutes les dimensions géométriques du contour extérieur (152) de la pale de rotor (110) sont constantes dans la zone de segmentation (160).

4. La pale de rotor divisée (110) selon l'une des revendications précédentes,
sachant qu'une profondeur de profil (144) dans la zone de segmentation (160), sur un côté faisant face au moyeu de pale de rotor (112), est augmentée par rapport à une autre profondeur de profil dans une zone (164) adjacente à la zone de segmentation (160).

5. La pale de rotor divisée (110) selon l'une des revendications précédentes,
sachant qu'une épaisseur de profil (146) dans la zone de segmentation (160), sur un côté faisant face au moyeu de pale de rotor (112), est augmentée par rapport à une autre profondeur de profil dans une zone (164) de la pale de rotor (110) adjacente à la zone de segmentation (160).

6. La pale de rotor divisée (110) selon l'une des revendications précédentes,
sachant que chacun des deux segments de pale de rotor (132, 134) comprend, dans la zone de liaison respective (154, 156), des moyens de liaison pour relier les deux segments de pale de rotor (132, 134), la zone de segmentation (160) s'étendant le long de l'axe longitudinal (120) au moins sur les moyens de liaison.

7. La pale de rotor divisée (110) selon l'une des revendications précédentes,
sachant que chacun des deux segments de pale de rotor (132, 134) comprend, dans la zone de liaison respective (154, 156), des moyens de liaison pour relier les deux segments de pale de rotor (132, 134), la zone de segmentation (160) s'étendant transversalement à l'axe longitudinal (120) au moins sur les moyens de liaison.

8. La pale de rotor divisée (110) selon l'une des revendications 6 ou 7,
sachant que les moyens de liaison sont des manchons de palier (148).

9. La pale de rotor divisée (110) selon l'une des revendications précédentes,
sachant que la zone de segmentation (160) s'étend sur 1 mètre de chaque côté le long de l'axe longitudinal (120) à partir du point de division (130).

10. La pale de rotor divisée (110) selon l'une des revendications précédentes,
sachant que le point de division (130) est situé dans une plage de 15 à 40 % ou de 60 à 90 % de la longueur de la pale de rotor (110), à partir d'une extrémité de raccordement de pale de rotor (126).

11. Segment de pale de rotor (132) pour une pale de rotor divisée (110) d'une éolienne (100) selon l'une des revendications précédentes, comprenant une première extrémité de raccordement (136) ayant une première zone de liaison (154) le long de l'axe longitudinal (120), la première extrémité de raccordement (136) étant associée à une deuxième extrémité de raccordement (138) d'un autre segment de pale de rotor (134) pour la liaison, le contour extérieur de la pale de rotor (110) étant simplement incurvé dans la première zone de liaison (154).
